# EUROPÄISCHE PATENTSCHRIFT

(11) **EP 2 834 098 B1**
(45) Veröffentlichungstag und Bekanntmachung des Hinweises auf die Patenterteilung: **02.06.2021**
(21) Anmeldenummer: 13708735.9
(22) Anmeldetag: 27.02.2013
(51) Int. Cl.: B60L 3/12, B60L 53/14, B60L 53/64, B60L 53/66, B60L 58/12

(54) **VERFAHREN UND SYSTEM ZUM STEUERN DES AUFLADEVORGANGS EINES ELEKTRISCHEN ENERGIESPEICHERS, INSBESONDERE IN EINEM FAHRZEUG**
METHOD AND SYSTEM FOR CONTROL OF CHARGING PROCESS OF AN ELECTRIC ENERGY STORAGE, PARTICULARLY IN A VEHICLE
PROCÉDÉ ET SYSTÈME PERMETTANT DE COMMANDER UN PROCESSUS DE CHARGE D'UN ACCUMULATEUR D'ÉNERGIE ÉLECTRIQUE, NOTAMMENT DANS UN VÉHICULE

(30) Priorität: 07.04.2012 DE 102012007126
(43) Veröffentlichungstag der Anmeldung: 11.02.2015
(73) Patentinhaber: Volkswagen Aktiengesellschaft, 38440 Wolfsburg (DE)
(72) Erfinder: VUJASINOVIC, Mirko, 38446 Wolfsburg (DE)
(74) Vertreter: Patentanwälte Bressel und Partner mbB
(86) Internationale Anmeldenummer: PCT/EP2013/053963
(87) Internationale Veröffentlichungsnummer: WO 2013/149770

(56) Entgegenhaltungen:
- US-A1- 2010 017 249
- US-A1- 2010 017 249
- US-A1- 2010 211 340
- US-A1- 2010 211 340
- US-A1- 2011 106 329
- US-A1- 2011 106 329

## Beschreibung

Die vorliegende Erfindung betrifft ein Verfahren und ein System zum Steuern und Visualisieren des Aufladevorgangs eines elektrischen Energiespeichers. Bei dem Verfahren wird der Ladezustand des elektrischen Energiespeichers erfasst und es wird eine mit einem Parameter des Aufladevorgangs assoziierte Vorgabe erfasst. Aus einer Vielzahl möglicher Aufladevorgänge wird ein solcher Aufladevorgang ausgewählt, welcher die erfasste Vorgabe erfüllt.

Wiederaufladbare elektrische Energiespeicher sind als solche seit langem bekannt. Typische elektrische Energiespeicher sind als Akkumulatoren, kurz Akku, bekannt. Insbesondere für große Energiespeicher dieser Art, z.B. für Fahrzeugbatterien elektrisch angetriebener Fahrzeuge oder dezentrale Energiespeicher zur allgemeinen Energieversorgung, ist eine Steuerung des Aufladevorgangs nach Nutzervorgaben wichtig. Gründe sind unter anderem, dass die ggf. größeren wieder aufzuladenden Energiemengen je nach Aufladeart variable Kosten verursachen und dass sie lokal aus einem Stromnetz entnommen werden, bei dem der Aufladevorgang an sich an die Leistungsgrenzen stoßen kann. Ferner hat der Aufladevorgang einen Einfluss auf die Lebensdauer und damit die Leistungsfähigkeit des Energiespeichers. So ist ein bedarfsgerechtes Aufladen vorteilhaft, bei dem Zeitpunkt und Menge der zukünftigen Energieentnahme berücksichtigt wird.

Die DE 10 2009 045 784 A1 beschreibt ein Verfahren zur Erhöhung der Lebensdauer eines Traktionsakkumulators eines Elektro- oder Hybridfahrzeugs. Dabei wird beim Aufladen ein Alterungsparameter berücksichtigt, insbesondere der Ladezustand, bis zu dem das Aufladen erfolgen soll. Durch Beschränkung der Aufladung auf ein Niveau kleiner als dem maximalen Ladezustand, z.B. 80%, wird das Altern des Akkumulators mit jedem Aufladevorgang vermindert. Das Ladeniveau und der Aufladezeitpunkt wird dabei in Abhängigkeit von einer Fahrphasenvorgabe, z.B. Fahrtdauer, erforderliche Restreichweite und/oder Fahrtbeginn, bestimmt.

In der US 2010/0268411 A1 wird ein Monitor zum Anzeigen des Ladestatus einer Fahrzeugbatterie beschrieben. Einem Nutzer wird anhand von vorab bestimmten Kriterien der Ladezustand mitgeteilt, z.B. auf ein mobiles Endgerät. Auf diese Weise muss der Nutzer nicht ständig den Ladestatus überprüfen und kann sich ggf. auch bei nur teilgeladener Batterie informieren lassen, falls dies für die anstehende Fahrt ausreicht.

In der US 2001/022518 A1 wird das Abschätzen des Ladezustands von Li-Ionen-Akkus anhand von Aufladekurven beschrieben. Dabei werden bei niedrigem Ladezustand und konstantem Aufladestrom die Zeit gemessen, die von einer gegebenen Aufladespannung bis zum Erreichen der Nominalspannung benötigt wird, und es wird nach Erreichen dieser Nominalspannung die Zeit gemessen, die bis zum Absinken des Aufladestroms bis zu einem vorgegebenen Wert benötigt wird.

Aus der US 2010/017249 A1, der US 2011/106329 A1 sowie der US 2010/211340 A1 sind weitere Verfahren zum Steuern des Aufladevorgangs eines elektrischen Energiespeichers bekannt.

Es ist die Aufgabe der vorliegenden Erfindung, ein Verfahren und ein System zum Steuern des Aufladevorgangs eines elektrischen Energiespeichers der eingangs genannten Art bereitzustellen, welche leicht verständlich und intuitiv bedienbar sind.

Diese Aufgabe wird erfindungsgemäß durch ein Verfahren mit den Merkmalen des Anspruchs 1, einem Computerprogrammprodukt mit den Merkmalen des Anspruchs 7 und ein System mit den Merkmalen des Anspruchs 8 gelöst. Vorteilhafte Aus- und Weiterbildungen ergeben sich aus den abhängigen Ansprüchen.

Das erfindungsgemäße Verfahren ist dadurch gekennzeichnet, dass der Zeitverlauf wenigstens zweier möglicher Aufladevorgänge, von denen wenigstens einer ausgewählt wurde, visualisiert wird. Der Ladeablauf ist somit dem Nutzer unmittelbar nachvollziehbar. Ferner erkennt er alternative Wahlmöglichkeiten zum gewählten Aufladevorgang.

Der ausgewählte Aufladevorgang wird typischerweise automatisch nach Maßgabe der erfassten Vorgabe ausgeführt. Eine Auswahl eines alternativen Aufladevorgangs muss dabei nicht unmittelbar zu einer Veränderung des Aufladens führen, wenn sich die Vorgabe beispielsweise auf einen Startpunkt des Aufladevorgangs in der Zukunft richtet.

Der Ladezustand ist im Sinne der Erfindung beispielsweise die Ladungsmenge (State of Charge; SOC), die gespeicherte Energiemenge oder ein daraus resultierender Operativer Bereich, z.B. die Reichweite des Fahrzeugs mit der gespeicherten Ladungsmenge oder Energiemenge.

Die Visualisierung erfolgt auf geeignete Art und Weise, nämlich als Liniendiagramm, wobei der Ladezustand gegen einen Zeitparameter, z.B. die Zeit, eine Zeitspanne vom Jetztzeitpunkt oder einen anderweitig skalierten Zeitparameter, graphisch dargestellt wird.

Weiter wird eine mit dem Parameter des Aufladevorgangs assoziierte Vorgabe über eine Nutzereingabe erfasst, nachdem der Zeitverlauf wenigstens zweier möglicher Aufladevorgänge visualisiert wurde. Auf diese Nutzereingabe wird dann der Aufladevorgang ausgewählt und/oder ein bereits ausgewählter Aufladevorgang geändert. Dem Nutzer wird vor der konkreten Auswahl des Aufladevorgangs damit zumindest sein durch seine Auswahl verfügbarer Handlungsspielraum angezeigt. Ferner wird ihm eine einfache und intuitive Eingriffsmöglichkeit gewährt, wenn er den Aufladevorgang ändern möchte, z.B. um einen Fehler oder Irrtum zu korrigieren.

Gemäß einer Ausgestaltung des erfindungsgemäßen Verfahrens ist vorgesehen, dass die mit dem Parameter des Aufladevorgangs assoziierte Vorgabe über eine Manipulation der Visualisierung erfasst wird. Die Manipulation erfolgt je nach Ausführung der Anzeigevorrichtung über geeignete Bedienelemente, z.B. mittels eines Stellrädchens oder über eine berührungsempfindliche Oberfläche. Der Nutzer verschiebt beispielsweise Punkte eines Liniendiagramms oder gibt einen Punkt für den Ladeverlauf im angezeigten Diagramm vor. Eine solche Bedienung ist besonders intuitiv und schnell zu bedienen.

Gemäß einer Ausgestaltungsvariante wird der visualisierte Zeitverlauf des ausgewählten Aufladevorgangs gegenüber den visualisierten Zeitverläufen der Aufladevorgänge, die nicht ausgewählt wurden, hervorgehoben visualisiert. Die Hervorhebung des Zeitverlaufs des ausgewählten Ausladevorgangs erfolgt beispielsweise durch eine Ausblendung der alternativen Zeitabläufe nach Ablauf eines bestimmten Zeitintervalls und/oder durch die Visualisierung der alternativen Zeitabläufe mit einem geringeren Transparenzgrad. Dies unterstützt den Nutzer, sich in der Visualisierung besser zu orientieren und erleichtert somit auch eine ggf. erforderliche Bedienung zur Eingabe einer Korrektur. Die Hervorhebung kann zeitlich begrenzt sein und beispielsweise durch ein Bedienereignis rückgängig machbar sein.

Die Vorgabe umfasst typischerweise einen Ziel-Ladezustand und optional einen dazugehörigen Zeitpunkt, einen Ladeverlauf und/oder einen Kostenparameter für das Aufladen. Der Ladeverlauf umfasst dabei mehrere Ladezustand-Zeitpunkt-Paare, die den Kurvenverlauf der Aufladekurve charakterisieren. Die Vorgabe kann ferner auch einen Minimalladezustand definieren, bei dessen Erreichen der Nutzer beispielsweise informiert und/oder der Ladevorgang automatisch gestartet wird.

In einer Ausgestaltung der Erfindung ist vorgesehen, dass der momentane Strompreis und/oder die für ein zukünftiges Zeitintervall prognostizierte Entwicklung des Strompreises, der während des Aufladevorgangs des elektrischen Energiespeichers zu zahlen wäre, erfasst wird. Für eine Vielzahl möglicher Aufladevorgänge werden dann die aus den Strompreisen zu erwartenden Kosten berechnet und es wird ein im Vergleich zu alternativen Aufladevorgängen kostengünstiger Aufladevorgang visualisiert. Dabei wird insbesondere eine Optimierungsaufgabe gelöst, die den kostengünstigsten Aufladevorgang ermittelt und diesen zusammen mit alternativen Aufladevorgängen, z.B. dem schnellsten Aufladevorgang, dem Nutzer anzeigt. Falls es neben der Kostenvorgabe weitere Vorgaben gibt, so erfolgt die Berechnung der zu erwartenden Kosten unter den Randbedingungen dieser ggf. weiteren Vorgaben. Hierdurch erhält der Nutzer einen guten Überblick, in welcher Weise er auf die Kosten zum Aufladen des Systems einen Einfluss ausüben kann.

Gemäß einer weiteren vorteilhaften Ausgestaltung des erfindungsgemäßen Verfahrens werden Daten zum Zeitverlauf der Aufladevorgänge an eine mit dem elektrischen Energiespeicher über eine Funkschnittstelle verbundene Anzeigevorrichtung, insbesondere eines mobilen Endgeräts, übermittelt. Der Zeitverlauf wird dann auf der Anzeigevorrichtung visualisiert. Optional wird die mit dem Parameter des Aufladevorgangs assoziierte Vorgabe als Nutzereingabe durch eine Manipulation der Visualisierung auf der Anzeigevorrichtung erfasst. Der Nutzer hat hiermit die Möglichkeit, den Aufladevorgang mittels Fernbedienung zu bedienen und zu überwachen. Als mobile Endgeräte eignen sich insbesondere portable Navigationsgeräte, Mobiltelefone, PDA (Personal Digital Assistant), Laptops oder Tablett Computer mit einer standardisierten Mobilfunkschnittstelle, z.B. GPRS (General Packet Radio Service), UMTS (Universal Mobile Telecommunication System), WLAN (Wireless Local Area Network) oder Bluetooth.

Die Erfindung umfasst des Weiteren ein Computerprogrammprodukt mit Programmcode zur Durchführung des erfindungsgemäßen Verfahrens, wenn der Programmcode von einem Prozessor in einem mit einer Anzeigvorrichtung verbundenen Computer oder in einem Endgerät mit der Anzeigvorrichtung ausgeführt wird, auf welcher der Zeitverlauf der Aufladevorgänge visualisiert wird. Das Computerprogrammprodukt lässt sich beispielsweise in einfacher Weise als interoperabele Softwareanwendungen, sogenannte Apps, auf kleinen Datenträgern wie z.B. USB-Sticks (USB = Universal Serial Bus) oder zum Herunterladen von einer Internetseite aus dem Internet verfügbar machen. Eine solche Bereitstellung erlaubt eine schnelle Produktverbreitung und eine kostengünstige Entwicklung von Versionsanpassungen.

Das System zum Steuern eines Aufladevorgangs eines elektrischen Energiespeichers umfasst einen Ladezustandsmesser zum Erfassen des Ladezustands des elektrisches Energiespeichers, eine Steuereinheit, Mittel zum Erfassen einer Vorgabe, welche mit einem Parameter des Aufladevorgangs assoziiert ist und eine von der Steuereinheit steuerbare Anzeigevorrichtung, wobei die Steuereinheit derart ausgebildet ist, dass Zeitverläufe wenigstens zweier möglicher Aufladevorgänge berechnet werden und grafisch gleichzeitig als Liniendiagramme visualisiert werden, wobei einer der berechneten möglichen Aufladevorgänge zunächst ausgewählt wird, wobei eine mit dem Parameter des Aufladevorgangs assoziierte Vorgabe über eine Nutzereingabe erfasst wird, wobei aufgrund der Nutzereingabe einer der grafisch dargestellten Aufladevorgänge ausgewählt und durchgeführt wird oder ein bereits ausgewählter Aufladevorgang geändert und durchgeführt wird.

Vorzugsweise ist mittels des Systems der Aufladevorgang eines solchen elektrischen Energiespeichers steuerbar ist, welcher für den elektrischen Antrieb eines Fahrzeugs geeignet ist oder welcher ein dezentraler, stationärer Energiespeicher ist. Solche dezentralen, stationären Energiespeicher umfassen insbesondere ein Gebäude-Notstromaggregat oder ein Zwischenspeicheraggregat einer erneuerbaren Energiequelle. Das Energiemanagement solcher Energiespeicher wird nicht nur immer wichtiger, sondern es tritt auch zunehmend eine Verschmelzung beider Anwendungsbereiche auf. So verändert sich durch die stetige Förderung der erneuerbaren Energiequellen das zeitlich und räumlich verfügbare Energieangebot, welches auf dem freien Strommarkt zu kurzfristig volatilen Strompreisen führen kann. Andererseits dienen in einem solchen Szenario Fahrzeugbatterien von Fahrzeugen mit elektrischem Antrieb als Zwischenspeicher elektrischer Energie, die prinzipiell nicht nur für den Antrieb des Fahrzeugs, sondern auch als Energiepuffer oder als Notstromaggregat verwendbar sind. Das erfindungsgemäße Verfahren und das erfindungsgemäße System eignet sich insbesondere für die Anwendung dieses Szenarios.

Die Erfindung wird nun anhand eines Ausführungsbeispiels mit Bezug zu den Figuren näher erläutert.
- Figur 1: zeigt schematisch eine Konfiguration mit einem System zum Steuern des Aufladevorgangs einer Fahrzeugbatterie gemäß einem Ausführungsbeispiel der Erfindung und
- Figur 2: zeigt schematisch Zeitverläufe, die gemäß dem Ausführungsbeispiel der Erfindung auf einem mobilen Endgerät visualisiert werden.

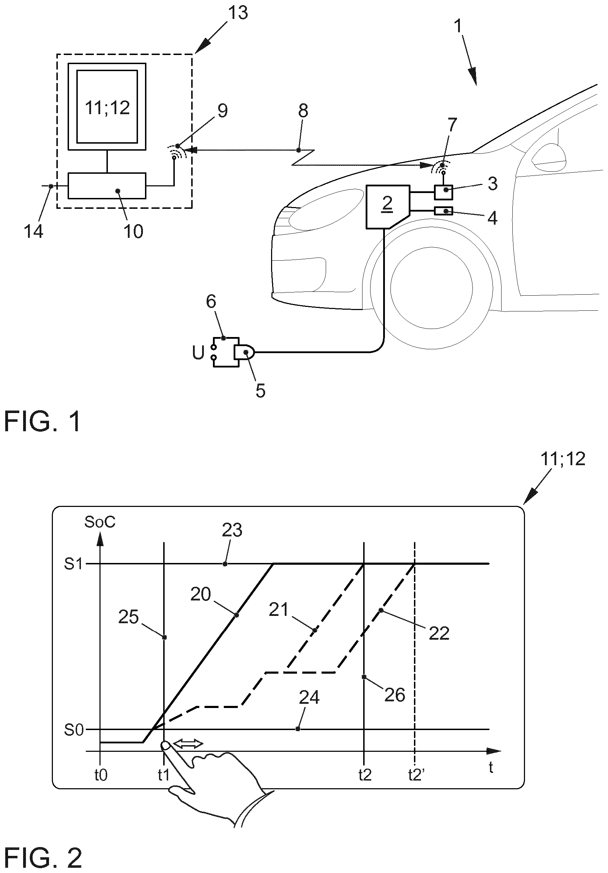

In der Figur 1 ist schematisch eine Konfiguration mit einem System zum Steuern des Aufladevorgangs einer Batterie 2 eines Fahrzeugs 1 mit elektrischem Antrieb gemäß dem Ausführungsbeispiel der Erfindung dargestellt. Bei der aufzuladenden Batterie kann es sich auch um eine andere Batterie handeln, z.B. ein Gebäude-Notstromaggregat oder ein elektrisches Zwischenspeicheraggregat für eine erneuerbare Energiequelle wie beispielsweise einer Solar- oder Windkraftanlage (nicht dargestellt).

Die Batterie 2 ist auf an sich bekannte Art mit einer Batteriesteuerung 3 verbunden, mittels welcher die Stromaufnahme und Stromabgabe der Batterie 2 gesteuert wird. Ferner ist die Batterie 2 über ein Ladekabel mit einem Ladestecker 5 an einen Stromnetzzugang 6, insbesondere an das öffentliche Stromnetz, anschließbar.

Das erfindungsgemäße System zum Steuern des Aufladevorgangs der Batterie 2 umfasst einen Ladezustandsmesser 4, welcher in regelmäßigen Abständen den Ladezustand der Batterie 2 misst und die entsprechenden Daten an die Batteriesteuerung 3 übermittelt. Über ein mit der Batteriesteuerung 3 verbundenes Funkmodul 7 können Daten aus der Batteriesteuerung 3, insbesondere die vom Ladezustandsmesser 4 empfangenen Ladezustandsdaten, an andere externe Empfangsgeräte mittels der Funkschnittstelle 8 direkt oder über ein Netzwerk (nicht dargestellt) übertragen werden. Dort hat ein Nutzer dann die Möglichkeit, den Batteriestatus auch von der Ferne aus abzurufen und in den Aufladevorgang der Batterie 2 steuernd einzugreifen. Die Daten aus der Batteriesteuerung 3 können alternativ oder auch zusätzlich an ein im Fahrzeug 1 fest installiertes Bordnavigationsgerät (nicht dargestellt) übermittelt werden, von wo aus der Batteriestatus ebenfalls abrufbar ist. Die Daten und dazugehörige Anzeigeinhalte sind, falls die Daten an mehrere Empfangsgeräte übermittelt werden, zwischen diesen mehreren Empfangsgeräten synchronisierbar.

Geeignete externe Empfangsgeräte sind insbesondere an sich bekannte tragbare Endgeräte, z.B. ein vom Fahrzeug 1 lösbares Navigationsgerät oder Mobilgeräte mit einer Mobilfunkschnittstelle, z.B. ein PDA 13 (PDA = Personal Digital Assistant, "digitaler Assistent"). Ferner können auch ortsfeste Endgeräte wie Desk-Top Computer verwendet werden, welche die für das Aufladen relevanten Daten über ein Festnetz empfangen, welches mit der Funkschnittstelle 8 verbunden ist (nicht dargestellt).

Der PDA 13 umfasst ein Funkmodul 9, welches gemäß demselben Standard wie das Funkmodul 7 im Fahrzeug 1 arbeitet, wenn eine Datendirektverbindung zwischen dem PDA 13 und dem Fahrzeug 1 herzustellen ist. Als gängiger Standard eignet sich hierfür beispielsweise Bluetooth. Das Funkmodul 9 oder ein weiteres Funkmodul (nicht dargestellt) muss nicht gemäß demselben Standard wie das Funkmodul 7 im Fahrzeug 1 arbeiten, wenn die Daten über ein Mobilfunknetz übertragen werden. Beispielsweise funkt das Funkmodul 7 gemäß dem GPRS-Standard (GPRS = General Packet Radio Service), das Funkmodul 9 gemäß dem HSDPA-Standard (High Speed Packet Downlink Access), wobei die Protokollkonvertierung im Mobilfunknetz stattfindet.

Das PDA 13 umfasst eine Steuereinheit 10, z.B. einen an sich bekannten Datenprozessor. Die Steuereinheit 10 ist mit dem Funkmodul 9 verbunden und kann somit Daten über die Funkschnittstelle 8 empfangen. Die Steuereinheit 10 ist ferner mit einem Display 11 mit einer berührungsempfindlichen Oberfläche 12, einem sogenannten Touchscreen, verbunden. Über die berührungsempfindliche Oberfläche 12 sind manuelle Nutzereingaben erfassbar, die an die Steuereinheit 10 weitergeleitet und dort verarbeitet werden. Mittels der Steuereinheit 10 sind ferner die Anzeigeinhalte auf dem Display 11 steuerbar.

In der Steuereinheit 10 ist ein ausführbares Programm gespeichert, mittels welchem der Aufladevorgang der Batterie 2 steuerbar ist, wie dies im Zusammenhang mit dem erfindungsgemäßen Verfahren noch näher erläutert wird. Das ausführbare Programm ist beispielsweise auf der Steuereinheit 10 vorinstalliert und/oder als sogenannte App über das Funkmodul 9 aus dem Internet bzw. von einem externen Speicher über eine Datenschnittstelle 14, z.B. einer USB-Schnittstelle (USB = Universal Serial Bus), auf die Steuereinheit 10 herunterladbar.

Das erfindungsgemäße Verfahren wird nun anhand eines Ausführungsbeispiels mit Bezug zu der Figur 2 näher erläutert. Zur Ausführung kann insbesondere das mit Bezug zur Figur 1 beschriebene System verwendet werden, auf welches sich im Folgenden auch ausdrücklich bezogen wird.

Als Ausgangssituation sei das Fahrzeug 1 vom Fahrer abgestellt und verlassen worden. Der Fahrer habe ferner die Batterie 2 des Fahrzeugs 1 über den Ladestecker 5 mit dem Netzzugang 6 des öffentlichen Stromnetzes verbunden. Das in der Steuereinheit 10 des PDA 13 installierte ausführbare Programm zum Steuern und Visualisieren des Aufladevorgangs der Batterie 2 wird in einer Ausführungsform automatisch gestartet, z.B. wenn über die Batteriesteuerung 3 ein Impuls erfasst wurde, dass die Batterie 2 mit dem Stromnetz verbunden wurde. Die Batteriesteuerung 3 sendet dann ein Signal an die Steuereinheit 10 des PDA 13, in dem das ausführbare Programm gestartet wird. In einer alternativen Ausführungsform wird das Programm durch eine entsprechende Bedienaktion auf seinem PDA 13 vom Fahrer manuell gestartet.

Der Ladezustand der Batterie 2 wird nun regelmäßig vom Ladezustandsmesser 4 gemessen. Die dazugehörigen Daten, z.B. Zeit-Ladezustands-Paare, werden an die Batteriesteuerung 3 weitergeleitet und über die Funkschnittstelle 8 an die Steuereinheit 10 des PDA 13 übermittelt. Die Aufbereitung der Daten, insbesondere für die Anzeige, kann an geeigneter Stelle erfolgen. Die Aufbereitung erfolgt beispielsweise dezentral am jeweiligen Empfangsgerät oder zentral z.B. in der Batteriesteuerung 3.

Ferner wird der momentane Strompreis und die für ein zukünftiges Zeitintervall prognostizierte Entwicklung des Strompreises, der während eines potentiellen Aufladevorgangs der Batterie 2 zu zahlen wäre, erfasst. Daten zum Strompreis werden entweder manuell mittels einer Nutzereingabe, über die Funkschnittstelle 8 vom Stromanbieter, z.B. über einen Internetdienst, oder von der Batteriesteuerung 3 über Datenimpulse aus dem Stromnetz selbst empfangen. In letzterem Fall werden die Strompreisdaten von der Batteriesteuerung 3 über die Funkschnittstelle 8 an die Steuereinheit 10 weitergeleitet. In der Steuereinheit 10 werden sodann für eine Vielzahl möglicher Aufladevorgänge die aus den Strompreisen zu erwartenden Kosten berechnet.

Als weitere Randbedingung für mögliche Aufladevorgänge wird vorzugsweise auch noch die maximal zulässige Stromentnahme aus dem Stromnetz berücksichtigt. Diese ist nicht nur durch die Versorgungsmodalität aus dem Stromnetz begrenzt, z.B. durch einen Stromentnahmetarif mit einer ggf. tageszeitabhängigen Leistungsbegrenzung, sondern auch durch die am Aufladevorgang beteiligten Komponenten im Fahrzeug 1, z.B. dem Ladegerät und der Batterie 2, und durch die Eigenschaft der Ladestation, z.B. dem Ladekabel.

Die Steuereinheit 10 prüft nun verschiedene mögliche Aufladevorgänge der Batterie 2 und steuert das Display 11 derart, dass die Zeitverläufe 20 - 22 mehrerer möglicher Aufladevorgänge auf dem Display 11 angezeigt werden. Insbesondere werden Zeitverläufe verschiedener Aufladestrategien angezeigt. In der Figur 2 sind der Zeitverlauf 20 für den schnellsten Aufladevorgang bis zu einem Ladezustand S1, der Zeitverlauf 21 für einen alternativen Aufladevorgang, bei welchem der Ladezustand S1 erst zu einem späteren Zeitpunkt t2 erreicht wird, und der Zeitverlauf 22, welcher für einen Aufladevorgang gilt, der im Vergleich zu alternativen Aufladevorgängen kostengünstig ist, angezeigt. Im gezeigten Beispiel wird per Defaulteinstellung automatisch zunächst der Zeitverlauf 20 für den schnellsten Aufladevorgang bis zu einem Ladezustand S1 ausgewählt.

Die alternativen Zeitverläufe 20 - 22 werden zumindest temporär gleichzeitig dargestellt. Der visualisierte Zeitverlauf 20 des ausgewählten Aufladevorgangs wird dabei gegenüber den visualisierten Zeitverläufen 21, 22 der Aufladevorgänge, die nicht ausgewählt wurden, hervorgehoben visualisiert. Der Zeitverlauf 20 wird z.B. fett und rot dargestellt, die Zeitverläufe 21, 22 werden mit einer anderen Farbe, z.B. einem Grauton, mit einer gestrichelten Linie und/oder semitransparent dargestellt. Die alternativen Zeitverläufe können auch nach Ablauf eines Zeitintervalls automatisch ausgeblendet werden und erst durch eine Nutzerinteraktion, z.B. wenn der Fahrer den Touchscreen 11, 12 seines PDA 13 berührt, wieder erneut angezeigt werden.

Der Fahrer gibt nun eine mit einem Parameter des Aufladevorgangs der Batterie 2 assoziierte Vorgabe in sein PDA 13 ein, z.B. indem er auf dem Touchscreen 11, 12 einen der Zeitverläufe 20 - 22 durch kurzes Antippen auswählt oder einen der Zeitverläufe 20 - 22 auf dem Touchscreen 11, 12 berührt und manipuliert. Sowie die Steuereinheit 10 eine Vorgabe zum Aufladevorgang der Batterie 2 empfangen hat, wird unter den Zeitverläufen 20 - 22 wenigstens einer angezeigt, der die erfasste Vorgabe erfüllt.

Im folgenden werden mit Bezug zu der Figur 2 einige Beispiele beschrieben, auf welche Weise der Fahrer über sein PDA 13 das Aufladen der Batterie 2 des Fahrzeugs 1 steuern kann. Die Zeitverläufe 20 - 22 werden dabei als Liniendiagramme mit dem Zeitargument t auf der X-Achse und dem Ladezustand SoC auf der Y-Achse dargestellt. Die Y-Achse schneidet die X-Achse beim Jetztzeitpunkt t0. Ferner sind auf der Y-Achse zwei definierte Ladezustände markiert, von denen der Ladezustand S0 einem festgelegten Minimalladezustand entspricht, unter den der Ladezustand nicht mehr sinken soll, und der Ladezustand S1 einem definierten zulässigen Maximalladezustand entspricht, bis zu dem die Batterie 2 aufzuladen ist.

Minimal- und Maximalladezustand S0, S1 können als Nutzervorgabe verändert werden. Der Fahrer berührt z.B. die Y-Achse auf dem Touchscreen 11, 12 an der Position die dem Maximalladezustand S1 entspricht. Daraufhin wird ihm ein waagerechter Manipulationsbalken 23 angezeigt, den er mit dem Finger nach oben oder nach unten ziehen kann, um den Wert des Maximalladezustands S1 entsprechend zu verändern. Die Vorgabe des Maximalladezustands ist z.B. dann wichtig, wenn für die nächste Fahrt des Fahrzeugs 1 ein volles Aufladen der Batterie 2 nicht benötigt wird. Weil ein permanenten Vollaufladen der Batterie 2 sich nachteilig auf deren Lebensdauer und Leistungsfähigkeit auswirkt, kann in einem solchen Fall ein relativ niedriger Maximalladezustand S1 im Vergleich zum maximal möglichen Ladezustand vorgegeben werden.

Der Minimalladezustand S0 kann auf analoge Weise über den Manipulationsbalken 24 verändert werden. Die Vorgabe eines Minimalladezustands S0 ist z.B. dann wichtig, wenn die Batterie 2 kurz vor dem geplanten Neustart des Fahrzeugs 1 für andere Funktionen als dem Antrieb des Fahrzeugs 1, z.B. zum Betreiben einer Standheizung, verwendet werden soll. In diesem Fall sollte ein zu tiefes Absinken des Ladezustands vermieden werden, um in der Batterie 2 für die anderen Funktionen die nötige Energiereserve verfügbar zu haben.

Der Zeitpunkt des Aufladebeginns und/oder der Zeitpunkt, zu welchem ein definierter Ladezustand S1 erreicht werden soll, kann ebenfalls durch eine Nutzervorgabe verändert werden. Der Fahrer kann beispielsweise über einen Manipulationsbalken 25 den dazugehörigen Startzeitpunkt t1 zum Aufladebeginn verändern. Der Fahrer berührt den Touchscreen 11, 12 an der entsprechenden Position und zieht den Manipulationsbalken 25 nach links oder rechts, je nachdem, ob der Aufladevorgang früher oder später beginnen soll.

Der Zeitpunkt t2, an welchem der vorgegebene Maximalladezustand S1 erreicht werden soll, kann auf analoge Weise über den Manipulationsbalken 26 verändert werden. Der Fahrer möchte beispielsweise prinzipiell den kostengünstigsten Aufladevorgang gemäß dem Zeitverlauf 22 auswählen. Er stellt jedoch fest, dass für die anstehende Fahrt des Fahrzeugs 1 die maximale Batterieladung benötigt wird und zwar schon, bevor der Aufladevorgang gemäß dem Zeitverlauf 22 beendet wäre. In diesem Fall wählt er den Zeitverlauf 22 aus, woraufhin ihm die Manipulationsbalken 25, 26 an den Zeitpunkten t1, t2' angezeigt werden. Der Fahrer zieht daraufhin den Manipulationsbalken 26 etwas nach links, bis der nun neu vorgegebene Zeitpunkt t2 dem Startzeitpunkt der anstehenden Fahrt des Fahrzeugs 1 entspricht. Auf diese Weise erhält er z.B. den Zeitverlauf 21, der unter der Nebenbedingung des vorgezogenen Startpunkt die kostenoptimierte Alternative des Aufladevorgangs darstellt.

Der Fahrer kann diese oder weitere Vorgaben auch auf andere Art und Weise eingeben. So kann er beispielsweise die Parameterwerte auch als numerischen Wert eintippen oder über ein Stellmittel, z.B. einen Wippsteller herauf- bzw. herabsetzen (nicht dargestellt).

Der Fahrer kann den Aufladevorgang zwischen zwei Fahrten immer wieder beobachten und bei Bedarf in die Steuerung des Aufladevorgangs eingreifen. Er kann einen bereits ausgewählten Aufladevorgang ändern oder einen nicht ausgewählten, alternativ angezeigten Aufladevorgang auswählen. Dies ist beispielsweise dann nötig, wenn sich der Startpunkt der anstehenden Fahrt verschoben hat. In diesem Fall muss der Startpunkt t1 des Aufladevorgangs und/oder der Zeitpunkt t2 bei Erreichen des vorgegebenen Maximalladezustands S1 angepasst werden. Ggf. muss der Fahrer von einem kostengünstigen Zeitverlauf 22, der relativ lange dauert, in einen Zeitverlauf 21, 20 mit einem schnelleren Aufladevorgang wechseln. Es ist optional möglich, den Fahrer in einem solchen Fall zu benachrichtigen, z.B. durch eine elektronische Kurzmitteilung über die Funkschnittstelle 8 auf sein PDA 13.

Der Zeitverlauf 20 - 22 des gerade ausgewählten Aufladevorgangs wird von der Steuereinheit 10 über die Funkschnittstelle 8 an die Batteriesteuerung 3 übermittelt. Die Batteriesteuerung 3 führt den Aufladevorgang dann nach Maßgabe des ausgewählten Zeitverlaufs 20 - 22 aus.

## Patentansprüche

1. Verfahren zum Steuern des Aufladevorgangs eines elektrischen Energiespeichers (2), bei dem
- der Ladezustand des elektrischen Energiespeichers (2) erfasst wird,
- Zeitverläufe (20, 22) wenigstens zwei möglicher Aufladevorgänge berechnet werden und grafisch gleichzeitig als Liniendiagramme visualisiert werden, wobei einer der berechneten möglichen Aufladevorgänge zunächst ausgewählt wird,
- eine mit einem Parameter des Aufladevorgangs assoziierte Vorgabe über eine Nutzereingabe erfasst wird, wobei aufgrund der Nutzereingabe einer der grafisch dargestellten Aufladevorgänge ausgewählt und durchgeführt wird oder ein bereits ausgewählter Aufladevorgang geändert und durchgeführt wird.

2. Verfahren nach Anspruch 1,
**dadurch gekennzeichnet,**
**dass** die mit dem Parameter des Aufladevorgangs assoziierte Vorgabe über eine Manipulation der Visualisierung erfasst wird.

3. Verfahren nach einem der vorangegangenen Ansprüche,
**dadurch gekennzeichnet,**
**dass** der visualisierte Zeitverlauf (20) des ausgewählten Aufladevorgangs gegenüber den visualisierten Zeitverläufen (21, 22) der Aufladevorgänge, die nicht ausgewählt wurden, hervorgehoben visualisiert wird.

4. Verfahren nach einem der vorangegangenen Ansprüche,
**dadurch gekennzeichnet,**
**dass** die Vorgabe einen Ziel-Ladezustand (S0, S1) und optional einen dazugehörigen Zeitpunkt (t1, t2, t3), einen Ladeverlauf (20 - 22) und/oder einen Kostenparameter für das Aufladen umfasst.

5. Verfahren nach einem der vorangegangenen Ansprüche,
**dadurch gekennzeichnet, dass**
- der momentane Strompreis und/oder die für ein zukünftiges Zeitintervall prognostizierte Entwicklung des Strompreises, der während des Aufladevorgangs des elektrischen Energiespeichers (2) zu zahlen wäre, erfasst wird,
- für eine Vielzahl möglicher Aufladevorgänge die aus den Strompreisen zu erwartenden Kosten berechnet werden und
- ein im Vergleich zu alternativen Aufladevorgängen kostengünstiger Aufladevorgang visualisiert wird.

6. Verfahren nach einem der vorangegangenen Ansprüche,
**dadurch gekennzeichnet, dass**
- Daten zu den Zeitverläufen (20 - 22) der Aufladevorgänge an eine mit dem elektrischen Energiespeicher (2) über eine Funkschnittstelle (7 - 9) verbundene Anzeigevorrichtung (11), insbesondere eines mobilen Endgeräts (13), übermittelt werden und
- die Zeitverläufe (20 - 22) auf der Anzeigevorrichtung (11) visualisiert werden und optional die mit dem Parameter des Aufladevorgangs assoziierte Vorgabe als Nutzereingabe durch eine Manipulation der Visualisierung auf der Anzeigevorrichtung (11) erfasst wird.

7. Computerprogrammprodukt mit Programmcode zur Durchführung eines Verfahrens nach einem der Ansprüche 1 bis 6, wenn der Programmcode von einem Prozessor (10) in einem mit einer Anzeigevorrichtung (11) verbundenen Computer oder in einem Endgerät (13) mit der Anzeigevorrichtung (11) ausgeführt wird, auf welcher die Zeitverläufe (20, 22) der Aufladevorgänge visualisiert werden.

8. System zum Steuern des Aufladevorgangs eines elektrischen Energiespeichers (2) umfassend
- einen Ladezustandsmesser (4) zum Erfassen des Ladezustands des elektrischen Energiespeichers (2),
- eine Steuereinheit (10),
- Mittel (12) zum Erfassen einer Vorgabe, welche mit einem Parameter des Aufladevorgangs assoziiert ist, und
- eine von der Steuereinheit (10) steuerbare Anzeigevorrichtung (11), wobei die Steuereinheit (10) derart ausgebildet ist, dass Zeitverläufe (20, 22) wenigstens zweier möglicher Aufladevorgänge berechnet werden und grafisch gleichzeitig als Liniendiagramme visualisiert werden, wobei einer der berechneten möglichen Aufladevorgänge zunächst ausgewählt wird, wobei eine mit dem Parameter des Aufladevorgangs assoziierte Vorgabe über eine Nutzereingabe erfasst wird, wobei aufgrund der Nutzereingabe einer der grafisch dargestellten Aufladevorgänge ausgewählt und durchgeführt wird oder ein bereits ausgewählter Aufladevorgang geändert und durchgeführt wird.

9. System nach Anspruch 8,
**dadurch gekennzeichnet, dass**
das mittels des Systems der Aufladevorgang eines elektrischen Energiespeichers (2) steuerbar ist, welcher
- für den elektrischen Antrieb eines Fahrzeugs (1) geeignet ist oder
- ein dezentraler, stationärer Energiespeicher ist.

## Claims

1. Method for controlling the charging process of an electrical energy storage (2), in which
- the charge state of the electrical energy storage (2) is detected,
- time curves (20, 22) of at least two possible charging processes are calculated and graphically visualized simultaneously as line diagrams, wherein one of the calculated possible charging processes is selected first,
- a preset associated with a parameter of the charging process is registered via a user input, wherein, on the basis of the user input, one of the graphically represented charging processes is selected and implemented, or an already selected charging process is modified and implemented.

2. Method according to Claim 1,
**characterized in that**
the preset associated with the parameter of the charging process is registered by manipulating the visualization.

3. Method according to any one of the preceding claims,
**characterized in that**
the visualized time curve (20) of the selected charging process is visually emphasized in comparison with the visualized time curves (21, 22) of the charging processes that were not selected.

4. Method according to any one of the preceding claims,
**characterized in that**
the preset includes a target charge state (S0, S1) and optionally a corresponding point in time (t1, t2, t3); a charging curve (20 - 22); and/or a cost parameter for charging.

5. Method according to any one of the preceding claims,
**characterized in that**
- the current price of electricity, and/or the change in the price of electricity predicted for a future time interval, which would need to be paid during the charging process of the electrical energy storage (2) is registered,
- the costs to be expected from the electricity prices are calculated for a plurality of possible charging processes, and
- a cheaper charging process as compared to alternative charging processes is visualized.

6. Method according to any one of the preceding claims,
**characterized in that**
- data relating to the time curves (20 - 22) of the charging processes are transmitted to a display device (11), in particular a mobile terminal (13), connected to the electrical energy storage (2) via a radio interface (7 - 9), and
- the time curves (20 - 22) on the display device (11) are visualized and, optionally, the preset associated with the parameter of the charging process is registered as user input via a manipulation of the visualization on the display device (11).

7. Computer program product with program code for implementing a method according to any one of Claims 1 to 6 when the program code is executed by a processor (10) in a computer connected to a display device (11), or in a terminal (13) having the display device (11), on which the time curves (20, 22) of the charging processes are visualized.

8. System for controlling the charging process of an electrical energy storage (2), comprising
- a charge state meter (4) for detecting the charge state of the electrical energy storage (2),
- a control unit (10),
- means (12) for registering a preset which is associated with a parameter of the charging process, and
- a display device (11) which can be controlled by the control unit (10), wherein the control unit (10) is designed in such a way that time curves (20, 22) of at least two possible charging processes are calculated and graphically visualized simultaneously as line charts, wherein one of the calculated possible charging processes is selected first, wherein one preset associated with the parameter of the charging process is registered via a user input, wherein, on the basis of the user input, one of the graphically displayed charging processes is selected and implemented or a previously selected charging process is modified and implemented.

9. System according to Claim 8,
**characterized in that**
the charging process of an electrical energy storage (2) can be controlled by means of the system, which is
- suitable for the electric drive of a motor vehicle (1), or
- a decentralized, stationary energy storage.

## Revendications

1. Procédé permettant de commander un processus de charge d'un accumulateur d'énergie électrique (2), dans lequel
- l'état de charge de l'accumulateur d'énergie électrique (2) est déterminé,
- les courbes de temps (20, 22) d'au moins deux processus de charge possibles sont calculées et visualisées graphiquement simultanément sous forme de graphiques linéaires, dans lequel l'un des processus de charge possibles calculés est d'abord sélectionné,
- une référence associée à un paramètre du processus de charge est déterminée par le biais d'une entrée d'utilisateur, dans lequel, en raison de l'entrée d'utilisateur, un des processus de charge représentés graphiquement est sélectionné et réalisé ou un processus de charge déjà sélectionné est modifié et réalisé.

2. Procédé selon la revendication 1,
**caractérisé**
**en ce que** la référence associée au paramètre du processus de charge est déterminée par le biais d'une manipulation de la visualisation.

3. Procédé selon l'une quelconque des revendications précédentes,
**caractérisé**
**en ce que** la courbe de temps (20) du processus de charge sélectionné est visualisée en surbrillance par rapport aux courbes de temps (21, 22) visualisées des processus de charge qui n'ont pas été sélectionnés.

4. Procédé selon l'une quelconque des revendications précédentes,
**caractérisé**
**en ce que** la référence comprend un état de charge cible (S0, S1) et facultativement un point temporel correspondant (t1, t2, t3), une courbe de charge (20 - 22) et/ou un paramètre de coût pour la charge.

5. Procédé selon l'une quelconque des revendications précédentes,
**caractérisé en ce que**
- le prix de l'électricité actuel et/ou l'évolution du prix de l'électricité prévue pour un intervalle à venir, qui seraient à payer pendant le processus de charge de l'accumulateur d'énergie électrique (2), sont déterminés,
- les coûts, à prévoir à partir du prix de l'électricité, pour une pluralité de processus de charge possibles sont calculés et
- un processus de charge à moindre coût par rapport aux processus de charge alternatifs est visualisé.

6. Procédé selon l'une quelconque des revendications précédentes,
**caractérisé en ce que**
- des données concernant les courbes de temps (20 - 22) des processus de charge sont transmises à un dispositif d'affichage (11) relié à l'accumulateur d'énergie électrique (2) par le biais d'une interface radio (7 - 9), en particulier un terminal mobile (13) et
- les courbes de temps (20 - 22) sont visualisées sur le dispositif d'affichage (11) et facultativement la référence associée au paramètre du processus de charge est déterminée comme entrée d'utilisateur par une manipulation de la visualisation sur le dispositif d'affichage (11).

7. Produit programme informatique comprenant un code de programme pour la réalisation d'un procédé selon l'une quelconque des revendications 1 à 6, lorsque le code de programme est exécuté par un processeur (10) dans un ordinateur relié à un dispositif d'affichage (11) ou dans un terminal (13) comprenant le dispositif d'affichage (11), sur lequel les courbes de temps (20, 22) des processus de charge sont visualisées.

8. Système permettant de commander un processus de charge d'un accumulateur d'énergie électrique (2) comprenant
- un compteur d'état de charge (4) destiné à déterminer l'état de charge de l'accumulateur d'énergie électrique (2),
- une unité de commande (10),
- un moyen (12) destiné à déterminer une référence, qui est associée à un paramètre du processus de charge et
- un dispositif d'affichage (11) pouvant être commandé par l'unité de commande (10), dans lequel l'unité de commande (10) est conçue de sorte que des courbes de temps (20, 22) d'au moins deux processus de charge possibles sont calculés et visualisés graphiquement simultanément sous forme de graphiques linéaires, dans lequel l'un des processus de charge possibles calculés est d'abord sélectionné, dans lequel une référence associée au paramètre du processus de charge est déterminée par le biais d'une entrée d'utilisateur, dans lequel, en raison de l'entrée d'utilisateur, l'un des processus de charge représentés graphiquement est sélectionné et réalisé ou un processus de charge déjà sélectionné est modifié et réalisé.

9. Système selon la revendication 8,
**caractérisé en ce que**
au moyen du système le processus de charge d'un accumulateur d'énergie électrique (2) peut être commandé, lequel
- est adapté pour l'entraînement électrique d'un véhicule (1) ou
- est un accumulateur d'énergie stationnaire décentralisé.
